# EUROPÄISCHE PATENTSCHRIFT

(11) **EP 2 613 864 B1**
(45) Veröffentlichungstag und Bekanntmachung des Hinweises auf die Patenterteilung: **09.11.2016**
(21) Anmeldenummer: 11754397.5
(22) Anmeldetag: 07.09.2011
(51) Int. Cl.: B01D 17/02

(54) **ABSCHEIDER ZUM TRENNEN EINES LEICHTFLÜSSIGKEIT-WASSER-GEMISCHES SOWIE VERFAHREN ZUM TRENNEN EINES LEICHTFLÜSSIGKEIT-WASSER-GEMISCHES**
SEPARATOR FOR SEPARATING A LIGHT LIQUID-WATER MIXTURE AND METHOD FOR SEPARATING A LIGHT LIQUID-WATER MIXTURE
SÉPARATEUR DESTINÉ À SÉPARER UN MÉLANGE LIQUIDE LÉGER/EAU ET PROCÉDÉ DE SÉPARATION D'UN MÉLANGE LIQUIDE LÉGER/EAU

(30) Priorität: 08.06.2011 DE 102011050939; 10.09.2010 DE 102010037455
(43) Veröffentlichungstag der Anmeldung: 17.07.2013
(73) Patentinhaber: ACO Severin Ahlmann GmbH & Co. KG, 24768 Rendsburg (DE)
(72) Erfinder: MAYER, Hermann, 68526 Ladenburg (DE); SCHMITZ, Marc, 68239 Mannheim (DE); GRUBE, Stefan, 68642 Bürstadt (DE); DOCEKAL, Libor, 59101 Zd´ár nad Sázavou (CZ)
(74) Vertreter: Bohnenberger, Johannes
(86) Internationale Anmeldenummer: PCT/EP2011/065448
(87) Internationale Veröffentlichungsnummer: WO 2012/032079

(56) Entgegenhaltungen:
- EP-A2- 0 522 265
- EP-A2- 0 820 796
- DE-C- 419 360
- DE-U1- 9 002 232
- DE-U1- 9 112 933
- US-A- 3 503 514

## Beschreibung

Die Erfindung betrifft einen Abscheider zum Trennen eines Leichtflüssigkeit-Wasser-Gemisches gemäß Patentanspruch 1 und ein Verfahren zum Trennen eines Leichtflüssigkeit-Wasser-Gemisches gemäß Patentanspruch 14.

Leichtflüssigkeitsabscheider werden überall dort eingesetzt, wo Leichtflüssigkeiten, meist Öle und Benzine, nicht in das öffentliche Kanalnetz oder einen Vorfluter eingeleitet werden dürfen, und entsprechend zurück gehalten werden müssen.

Die Funktionsweise der bisherigen Koaleszenzabscheider beruht auf dem System, dass sich kleine Tröpfchen der Leichtflüssigkeit, die im Abwasserstrom mitgerissen werden an einem engmaschigen Gitter oder Schaum das als Koaleszenzmaterial fungiert anhaften und dort zu großen Tropfen verschmelzen. Diese größeren Öltröpfchen steigen bei ausreichendem Auftrieb (Größe) auf. Das durchströmte Koaleszenzmaterial, das zum Beispiel in Form von feinporigen, aufgeschäumten Matten oder engmaschigen Drahtgeflechten besteht, bietet eine große Oberfläche, und durch das oleophile Verhalten der Oberfläche des Koaleszenzmaterials wird zudem das Anhaften von kleinsten Öltröpfchen gefördert. Es ist somit eine Oberfläche für die Koaleszenz gegeben.

Eine Vorrichtung der hier angesprochenen Art ist aus der EP 0 522 265 A2 bekannt.

Ein Nachteil dieser herkömmlichen Koaleszenzabscheider mit feinporigen Filtern besteht darin, dass sie neben den im Abwasser enthalten Leichtflüssigkeiten auch Schwebstoffe und Feinschlammanteile filtern. Da diese Stoffe sich auch an den Leichtflüssigkeitstropfen anlagern, die im Koaleszenzelement abgeschieden werden, lagern sich diese an der Oberfläche des Koaleszenzelementes ab. Um ein Verstopfen des Koaleszenzelementes und damit eine Fehlfunktion des Abscheiders zu verhindern, müssen die Koaleszenzelemente in regelmäßigen Abständen aufwendig gereinigt werden. Dies verursacht hohe Unterhaltskosten eines solchen Abscheiders.

Der Erfindung liegt die Aufgabe zu Grunde, einen Abscheider aufzuzeigen, der auf technisch einfache Art und Weise ein Leichtflüssigkeit-Wasser-Gemisch trennt.

Diese Aufgabe wird durch einen Abscheider nach Patentanspruch 1 und ein Verfahren nach Patentanspruch 14 gelöst.

Insbesondere wird die Aufgabe durch einen Abscheider gelöst, der in einem im Querschnitt kreis- oder ellipsenförmigen Behälter mit einer Behälterwand angeordnet ist, zum Trennen eines Leichtflüssigkeit-Wasser-Gemisches, beispielsweise von ölverschmutztem Wasser, umfassend: einen an einer ersten Seite des Behälters angeordneten Zulauf mit einer Zulaufschikane, die das zugeführte Gemisch nach unten leitet und in zwei im Wesentlichen gleich große erste Strömungsteile teilt, einen Ablauf mit einem Ablaufrohr, eine kreis- oder ellipsenförmige Strömungswand mit einer inneren Wandseite und einer äußeren Wandseite, wobei die Strömungswand zumindest die Hälfte eines Vollkreises, vorzugsweise zumindest dreiviertel eines Vollkreises, durchläuft und eine Öffnung aufweist, die einer dem Zulauf gegenüberliegenden zweiten Seite des Behälters zugewandt ist, wobei die Strömungswand zwischen der äußeren Wandseite der Strömungswand und der Behälterwand zwei Strömungskanäle an zwei gegenüberliegenden Seiten der Behälterwand jeweils von dem Zulauf zu der zweiten Seite des Behälters bildet, wobei in den Strömungskanälen jeweils einer der beiden ersten Strömungsteile von dem Zulauf zu der zweiten Seite des Behälters entlang der Behälterwand geführt wird, wobei die beiden ersten Strömungsteile an der zweiten Seite des Behälters mit im Wesentlichen entgegen gesetzten Strömungsrichtungen aufeinandertreffen und wiedervereinigt werden, und in den beiden Strömungskanälen angeordnete Lochelemente, die von den beiden ersten Strömungsteilen durchströmt werden.

Ein wesentlicher Punkt der Erfindung besteht in der Strömungsführung des Gemisches in dem Abscheider. Das Gemisch wird in Strömungsteile aufgeteilt und trifft mit im Wesentlichen entgegengesetzten Strömungsrichtungen aufeinander. Dieser Vorgang kann auch wiederholt werden. Ein Vorteil des erfindungsgemäßen Abscheiders ist es, dass die hydraulische Aufenthaltszeit des Gemisches in dem Abscheider reduziert werden kann. Ein weiterer Vorteil ist, dass der aufgezeigte Abscheider ohne feinporige Filter und ohne eine weitere Nachreinigungsstufe die nach EN 858 geforderten Ablaufwerte für einen Koaleszenzabscheider gemäß Normtestverfahren einhält. Insbesondere werden keine Filtermaterialen, wie z.B. Polyurethanschaum Drahtgestrick oder ähnliches, benötigt. Hierdurch sinkt der Reinigungsaufwand für den Abscheider und ein Verstopfen des Abscheiders und damit eine Fehlfunktion dieses werden weitgehend verhindert. Somit sinken die Unterhaltskosten des Abscheiders. Darüber hinaus wird durch die Führung des Gemisches in dem Abscheider das Volumen des Abscheiders optimal ausgenutzt. Hierdurch kann das Volumen des Abscheiders reduziert werden. Durch das Aufeinandertreffen der beiden ersten Strömungsteile an der zweiten Seite des Abscheiders entsteht eine rotierende Strömung, die die resultierende Fließgeschwindigkeit in Richtung Ablauf senkt. Durch die Senkung der Fließgeschwindigkeit können sich feine Sedimente besser niederschlagen sowie feine Öltröpfchen leichter aufsteigen.

In einer ersten Ausführungsform ist der Ablauf auf im Wesentlichen gleicher Höhe wie der Zulauf angeordnet ist. Vorteilhaft hieran ist, dass durch Durchlaufen des Abscheiders das Gemisch bzw. das Wasser im Wesentlichen keinen Höhenverlust erleidet. Somit kann der Abscheider technisch einfach in ein bestehendes Leitungsnetz eingefügt werden.

Zumindest das jeweils erste der Lochelemente in Strömungsrichtung des jeweiligen ersten Strömungsteils in dem jeweiligen Strömungskanal kann derart angeordnet sein, dass sich ein Teil des ersten Lochelements oberhalb einer Unterkante des Zulaufs befindet, zum Bilden einer rotierenden Strömung des jeweiligen ersten Strömungsteils zwischen dem sich oberhalb der Unterkante des Zulaufs befindlichen Teil des ersten Lochelements und dem Zulauf. Hierdurch bildet sich oberhalb der unteren Kante des Zulaufs in dem Raum zwischen dem Zulauf und dem ersten Lochelement eine rotierende Strömung. Durch diese rotierende Strömung findet an dieser Stelle bereits eine Abscheidung von größeren Mengen an Leichtflüssigkeit statt, die sich in diesem Bereich ansammeln.

In einer weiteren Ausführungsform sind an dem Ablauf, insbesondere an dem Ablaufrohr des Ablaufs, Strömungselemente zum erneuten Teilen der wiedervereinigten ersten Strömungsteile in zwei im Wesentlichen gleich große zweite Strömungsteile und zum Leiten der beiden zweiten Strömungsteile durch jeweils einen Verengungsbereich und von der zweiten Seite entlang der inneren Wandseite der Strömungswand in Richtung der ersten Seite des Behälters angeordnet sind, wobei die beiden zweiten Strömungsteile mit im Wesentlichen entgegen gesetzten Strömungsrichtungen an der inneren Wandseite der Strömungswand an der ersten Seite des Behälters aufeinandertreffen und wiedervereinigt werden. Durch die Strömung entlang der inneren Wandseite der Strömungswand sowie die Rotation der Strömung bzw. Strömungsteile und der daraus resultierenden deutlichen Verlängerung des Fließweges wird eine weitere Separation der Leichtflüssigkeit vom Wasser erreicht. Durch die Verengungsbereiche erhöht sich die Strömungsgeschwindigkeit der Strömungsteile an diesen Stellen. Dieser Anstieg der Strömungsgeschwindigkeit stellt sicher, dass feine Sedimente und Öltröpfchen vom Ablauf weggerissen werden, so dass eine Verstopfung bzw. ein Verschluss des Ablaufs weitgehend vermieden wird. Zudem wird durch das Zusammentreffen der zweiten Strömungsteile die Fließgeschwindigkeit erneut reduziert, wodurch das Ablagern von Sedimenten und das Aufsteigen von Öl verstärkt werden.

In einer weiteren Ausführungsform sind an der Öffnung der Strömungswand als Verlängerung der Strömungswand Strömungselemente zur Erzeugung einer rotierenden Strömung der beiden ersten Strömungsteile und/oder der beiden wiedervereinigten ersten Strömungsteile an der zweiten Seite des Behälters, zum erneuten Teilen der wiedervereinigten ersten Strömungsteile in zwei im Wesentlichen gleich große zweite Strömungsteile und zum Leiten der beiden zweiten Strömungsteile jeweils durch einen Verengungsbereich und von der zweiten Seite entlang der inneren Wandseite der Strömungswand in Richtung der ersten Seite des Behälters angeordnet sind, wobei die beiden zweiten Strömungsteile mit im Wesentlichen entgegen gesetzten Strömungsrichtungen an der inneren Wandseite der Strömungswand an der ersten Seite des Behälters aufeinandertreffen und wiedervereinigt werden. Durch die Strömungselemente als Verlängerung der Strömungswand wird das Entstehen von rotierenden Strömungen im hinteren Abscheidebereich begünstigt bzw. gefördert. Durch eine Verstärkung der rotierenden Strömungen wird der Fließweg des Gemisches weiter verlängert, wodurch eine Separation der Leichtflüssigkeit vom Wasser erhöht wird. Ebenfalls wird durch eine Verstärkung der rotierenden Strömungen die Fließgeschwindigkeit in Richtung des Ablaufs weiter abgesenkt, wodurch das Niederschlagen von feinen Sedimenten sowie das Aufsteigen feiner Öltröpfchen verstärkt werden. Durch die Strömung entlang der inneren Wandseite der Strömungswand sowie die Rotation der Strömung bzw. Strömungsteile und der deutlichen Verlängerung des Fließweges wird eine weitere Feinseparation der Leichtflüssigkeit vom Wasser erreicht. Durch die Verengungsbereiche erhöht sich die Strömungsgeschwindigkeit der Strömungsteile. Dieser Anstieg der Strömungsgeschwindigkeit stellt sicher, dass feine Sedimente und Öltröpfchen vom Ablauf weggerissen werden, so dass eine Verstopfung des Ablaufs weitgehend vermieden wird. Zudem wird durch das Zusammentreffen der zweiten Strömungsteile die Fließgeschwindigkeit erneut reduziert, wodurch das Ablagern von Sedimenten und das Aufsteigen von Öl verstärkt werden.

In einer weiteren Ausführungsform sind an der Öffnung der Strömungswand Strömungselemente angeordnet zum erneuten Teilen der wiedervereinigten ersten Strömungsteile in zwei im Wesentlichen gleich große zweite Strömungsteile, zum Leiten eines Teils der beiden zweiten Strömungsteile jeweils durch einen Verengungsbereich und von der zweiten Seite entlang der inneren Wandseite der Strömungswand in Richtung der ersten Seite des Behälters und zum Leiten eines Teils der jeweiligen zweiten Strömungsteile unterhalb der Strömungselemente, wobei zumindest Teile der beiden zweiten Strömungsteile mit im Wesentlichen entgegen gesetzten Strömungsrichtungen an der inneren Wandseite der Strömungswand an der ersten Seite des Behälters aufeinandertreffen und wiedervereinigt werden. Durch die Strömung entlang der inneren Wandseite der Strömungswand sowie die Rotation der Strömung bzw. Strömungsteile und der deutlichen Verlängerung des Fließweges wird eine weitere Feinseparation der Leichtflüssigkeit vom Wasser erreicht. Durch die Verengungsbereiche erhöht sich die Strömungsgeschwindigkeit der Strömungsteile. Dieser Anstieg der Strömungsgeschwindigkeit stellt sicher, dass feine Sedimente und Öltröpfchen vom Ablauf weggerissen werden, so dass eine Verstopfung des Ablaufs weitgehend vermieden wird. Zudem wird dadurch, dass ein Teil unterhalb der Strömungselemente entlang geführt wird, der Fließweg des Gemisches weiter verlängert. Dadurch wird eine verbesserte Separation der Leichtflüssigkeit vom Wasser erreicht. Zudem wird durch das Zusammentreffen von zumindest Teilen der zweiten Strömungsteile die Fließgeschwindigkeit dieser erneut reduziert, wodurch das Ablagern von Sedimenten und das Aufsteigen von Öl verstärkt werden.

Der Ablauf kann im Wesentlichen in der Mitte des Behälters angeordnet sein. Ein Vorteil hiervon ist, dass das Gemisch einen gleichlangen Fließweg zurücklegt unabhängig davon, wie die zweiten Strömungsteile geführt werden.

Der Abscheider kann im Wesentlichen spiegelsymmetrisch bezüglich einer Ebene durch den Zulauf in den Ablauf ausgebildet sein. Hierdurch ist sichergestellt, dass die Fließwege für die beiden ersten Strömungsteile jeweils gleichlang sind und die Fließwege für die beiden zweiten Strömungsteile jeweils gleich lang sind. Somit wird eine gleichmäßige Separation von Leichflüssigkeit von dem Wasser in den verschiedenen Strömungsteilen sichergestellt.

In einer weiteren Ausführungsform ist ein, insbesondere runder, rechteckiger oder ellipsoider, Grobschmutzfang um den Ablauf angeordnet. Der Grobschmutzfang verhindert den Austrag von Faserstoffen, Geäst etc. aus dem Abscheider. Somit wird ein Verstopfen des Ablaufs bzw. des Ablaufrohrs durch groben Schmutz weitgehend verhindert.

In einer weiteren Ausführungsform besteht zumindest die Oberfläche der Lochelemente und/oder der Strömungselemente und/oder der inneren und/oder der äußeren Wandseite der Strömungswand aus einem oleophilen Material, insbesondere PE-HD. Ein Vorteil hiervon ist, dass ein Anlagern der Leichtflüssigkeit an den jeweiligen Oberflächen erhöht wird und somit ein Bilden von größeren Leichtflüssigkeits-Tröpfchen begünstigt wird. Größere Leichtflüssigkeits-Tröpfchen steigen schneller als kleinere Leichtflüssigkeits-Tröpfchen an die Oberfläche des Gemisches bzw. des Wassers. Somit erhöht sich hierdurch die Separationsleistung des Abscheiders.

Zumindest ein Teil des jeweiligen Strömungskanals kann in Richtung eines Bodens des Behälters durch ein Begrenzungselement begrenzt sein. Durch diese Zwangsführung des Leichtflüssigkeit-Wasser-Gemisches in dem jeweiligen Strömungskanal wird die Abscheideleistung des Abscheiders deutlich erhöht. Durch den geringeren Querschnitt in dem Teil des jeweiligen Strömungskanals steigt die Fließgeschwindigkeit des Gemisches und ein Ablagern von Feststoffen in diesem Teil des jeweiligen Strömungskanals wird weitgehend vermieden.

An einem Boden des Behälters kann ein Schlammsammelraum angeordnet sein zum Aufnehmen und Sammeln von grobem Schlamm und/oder schweren Sedimenten. Hierdurch wird erreicht, dass sich auch Feststoffe in dem Abscheider von einem Leichtflüssigkeit-Wasser-Feststoff-Gemisch abscheiden können und in dem Abscheider gesammelt werden. Hierdurch wird erreicht, dass eine weitere Trennung solch eines Gemisches, beispielsweise in einem separaten Behälter, nicht notwendig ist. Durch den Schlammsammelraum am Boden des Behälters wird zudem sichergestellt, dass das Strömungsverhalten des Gemisches im restlichen Teil des Behälters durch die Ansammlung von Feststoffen am Boden des Behälters weitgehend nicht beeinflusst wird.

In einer weiteren Ausführungsform erstreckt sich mindestens eines der Lochelemente und/oder der Strömungselemente nur über einen Teil einer Höhe des Behälters.

Hierdurch wird das Strömungsverhalten des Gemisches in dem Behälter verbessert. Des Weiteren wird erreicht, dass sich Feststoffe des Gemisches besser absetzen können.

Die Erfindung wird auch durch ein Verfahren zum Trennen eines Leichtflüssigkeit-Wasser-Gemisches, beispielsweise von ölverschmutztem Wasser, in einem Abscheider mit einem Innenraum und einem Außenraum gelöst, das folgende Schritte umfasst: Zuführen des Gemisches durch einen Zulauf an einer ersten Seite des Abscheiders, Aufteilen des Gemisches in zwei etwa gleichgroße erste Strömungsteile, Durchströmen der beiden ersten Strömungsteile durch mehrere Lochelemente in zwei in dem Außenraum angeordneten Strömungskanälen, Wiedervereinigen der beiden ersten Strömungsteile auf einer der ersten Seite gegenüberliegenden zweiten Seite des Abscheiders durch Aufeinandertreffen der beiden ersten Strömungsteile mit im Wesentlichen entgegen gesetzten Strömungsrichtungen, Erneutes Aufteilen des Gemisches der beiden wiedervereinigten ersten Strömungsteile in zwei im Wesentlichen gleich große zweite Strömungsteile und Leiten der beiden zweiten Strömungsteile in den Innenraum in Richtung auf den Zulauf, Wiedervereinigen von zumindest Teilen der beiden zweiten Strömungsteile in dem Innenraum an der ersten Seite des Abscheiders durch Aufeinandertreffen von zumindest Teilen der beiden zweiten Strömungsteile mit im Wesentlichen entgegen gesetzten Strömungsrichtungen, und Ableiten des Wassers aus dem Innenraum durch einen Ablauf.

Ein Vorteil hiervon ist, dass die hydraulische Aufenthaltszeit des Gemisches im Abscheider reduziert werden kann. Vorteilhaft ist auch, dass der Reinigungsaufwand für den Abscheider sinkt und ein Verstopfen des Abscheiders und damit eine Fehlfunktion dieses weitgehend verhindert wird. Somit sinken die Unterhaltskosten. Ein weiterer Vorteil ist, dass der aufgezeigte Abscheider ohne feinporige Filter und ohne eine weitere Nachreinigungsstufe die nach EN 858 geforderten Ablaufwerte für einen Koaleszenzabscheider gemäß Normtestverfahren einhält. Darüber hinaus wird das Volumen des Abscheiders optimal ausgenutzt. Somit kann das Volumen des Abscheiders reduziert werden. Durch das Aufeinandertreffen der beiden ersten Strömungsteile an der zweiten Seite des Abscheiders entsteht eine rotierende Strömung, die die resultierende Fließgeschwindigkeit in Richtung Ablauf kurzfristig lenkt. Durch die Senkung der Fließgeschwindigkeit können sich feine Sedimente niederschlagen sowie feine Öltröpfchen aufsteigen. Durch die Strömung entlang der inneren Wand sowie die Rotation der Strömung bzw. Strömungsteile und der deutlichen Verlängerung des Fließweges wird eine weitere Feinseparation der Leichtflüssigkeit vom Wasser erreicht. Durch die Verengungsbereiche erhöht sich die Strömungsgeschwindigkeit der Strömungsteile. Dieser Anstieg der Strömungsgeschwindigkeit stellt sicher, dass feine Sedimente und Öltröpfchen vom Ablauf weggerissen werden, so dass eine Verstopfung bzw. ein Verschluss des Ablaufs weitgehend vermieden wird. Zudem wird durch das Zusammentreffen der zweiten Strömungsteile die Fließgeschwindigkeit erneut reduziert, wodurch das Ablagern von Sedimenten und das Aufsteigen von Öl verstärkt werden.

Bevorzugte Ausführungsformen ergeben sich aus den Unteransprüchen. Nachfolgend wird die Erfindung anhand von Zeichnungen von Ausführungsbeispielen näher erläutert. Hierbei zeigen
- Fig. 1: eine Aufsicht auf eine Ausführungsform eines erfindungsgemäßen Abscheiders;
- Fig. 2: eine Seitenansicht der Ausführungsform eines erfindungsgemäßen Abscheiders aus Fig. 1;
- Fig. 3: eine weitere Seitenansicht der Ausführungsform eines erfindungsgemäßen Abscheiders aus Fig. 1 und Fig. 2;
- Fig. 4: eine Aufsicht mit dem Strömungsverhalten des Gemisches in der Ausführungsform eines erfindungsgemäßen Abscheiders aus Fig. 1-3;
- Fig. 5: eine Aufsicht auf eine weitere Ausführungsform eines erfindungsgemäßen Abscheiders;
- Fig. 6: eine Aufsicht auf eine weitere Ausführungsform eines erfindungsgemäßen Abscheiders;
- Fig. 7: eine Seitenansicht der weiteren Ausführungsform eines erfindungsgemäßen Abscheiders aus Fig. 6;
- Fig. 8: eine weitere Seitenansicht der weiteren Ausführungsform eines erfindungsgemäßen Abscheiders aus Fig. 6 und Fig. 7;
- Fig. 9: eine Aufsicht mit dem Strömungsverhalten des Gemisches in der weiteren Ausführungsform eines erfindungsgemäßen Abscheiders aus Fig. 6-8;
- Fig. 10: eine Aufsicht auf eine weitere Ausführungsform eines erfindungsgemäßen Abscheiders;
- Fig. 11: eine Aufsicht auf eine weitere Ausführungsform eines erfindungsgemäßen Abscheiders;
- Fig. 12: eine Seitenansicht der weiteren Ausführungsform eines erfindungsgemäßen Abscheiders aus Fig. 11;
- Fig. 13: eine weitere Seitenansicht der weiteren Ausführungsform eines erfindungsgemäßen Abscheiders aus Fig. 11 und Fig. 12;
- Fig. 14: eine Aufsicht mit dem Strömungsverhalten des Gemisches in der weiteren Ausführungsform eines erfindungsgemäßen Abscheiders aus Fig. 11-13;
- Fig. 15: eine weitere Aufsicht auf eine weitere Ausführungsform eines erfindungsgemäßen Abscheiders; und
- Fig. 16-18: Seitenansichten weiterer Ausführungsformen eines erfindungsgemäßen Abscheiders.

Bei der nachfolgenden Beschreibung werden für gleiche und gleich wirkende Teile dieselben Bezugsziffern verwendet.

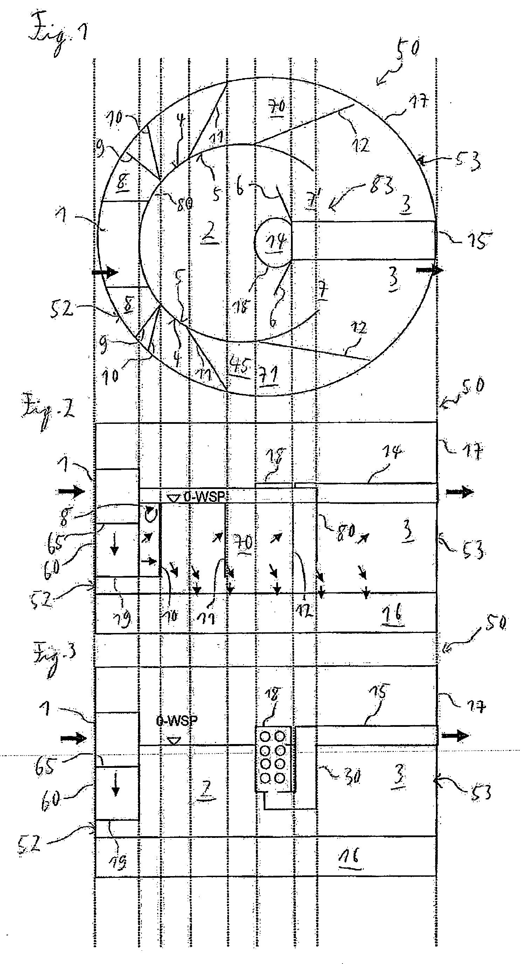

Fig. 1 zeigt eine Aufsicht auf eine erste Ausführungsform eines erfindungsgemäßen Abscheiders 50. Der Abscheider 50 weist eine im Querschnitt ellipsenförmige Form auf. Der Abscheider 50 umfasst einen Zulauf 1, durch den ein Leichtflüssigkeit-Wasser-Gemisch oder ein Leichtflüssigkeit-Wasser-Schlamm-Gemisch bzw. ein Leichtflüssigkeit-Wasser-Feststoff-Gemisch dem Behälter des Abscheiders 50 zugeführt wird. Die Leichtflüssigkeit kann beispielsweise Öl und/oder Benzin sein.

Das zugeführte Gemisch wird mittels einer Einlaufschikane 60 direkt am Zulauf 1 an der ersten Seite 52 des Abscheiders 52 nach unten, d.h. in Richtung des Bodens des Behälters des Abscheiders 50 gedrückt. Hier muss sich das zugeführte Gemisch aufgrund der Form der Zulaufschikane 60 in zwei Strömungsteile 75, 75' aufteilen. Die beiden Öffnungen der Zulaufschikane 60 weisen von der Unterkante der Zulaufschikane eine Größe von ca. 220 mm auf.

In dem Abscheider 50 ist eine Strömungswand 80 angeordnet, die im Querschnitt die im Wesentlichen gleiche Form wie der Behälter bzw. die Behälterwand 17 des Abscheiders 50 aufweist. Die Strömungswand 80 umfasst eine innere Wandseite 5, und eine äußere Wandseite 4. Die Strömungswand 80 durchläuft ca. ¾ eines Vollkreises, d.h. ca. 270°, und weist somit eine Öffnung 83 auf. Bei Durchlaufen der Strömungswand 80 von ca. 270° weist die Öffnung somit einen Winkel von ca. 90° auf. Die Öffnung 83 ist einer dem Zulauf 1 gegenüberliegenden zweiten Seite 53 des Abscheiders 50 zugewandt.

Zwischen der Strömungswand 80 und der Behälterwand 17 werden an zwei gegenüberliegenden Seiten des Behälters jeweils ein Strömungskanal 70, 71 gebildet. Nach dem Aufteilen des Gemisches in zwei erste Strömungsteile 75, 75' durch die Einlaufschikane 60 werden die beiden ersten Strömungsteile 75, 75' jeweils durch den ersten Strömungskanal 70 bzw. den zweiten Strömungskanal 71 von dem Zulauf 1 zu der zweiten Seite 53 des Behälters entlang der Behälterwand 17 geführt. Die Strömungsrichtung des ersten Strömungsteils 75 verläuft in der oberen Hälfte der Fig. 1 in dem ersten Strömungskanal 70 im Wesentlichen in Uhrzeigerrichtung. In der unteren Hälfte der Fig. 1 verläuft die Strömungsrichtung des ersten Strömungsteils 75' in dem zweiten Strömungskanal 71 im Wesentlichen entgegengesetzt zur Uhrzeigerrichtung.

In den Strömungskanälen 70, 71 sind jeweils mehrere Lochelemente 9-12, beispielsweise Lochbleche, angeordnet. Die Lochelemente 9-12 weisen jeweils einen Lochdurchmesser von ca. 40 mm auf. Größere und kleine Lochdurchmesser sind vorstellbar. Auch vorstellbar ist, dass die verschiedenen Lochelemente 9-12 unterschiedliche Lochdurchmesser aufweisen. Die Lochelemente 9-12 weisen jeweils eine große Vielzahl von Löchern auf. Die Löcher haben jeweils einen Abstand in horizontaler wie vertikaler Richtung von ca. 15 mm zueinander.

Die beiden ersten Strömungsteile 75, 75' durchströmen in dem jeweiligen Strömungskanal 70, 71 zumindest die ersten beiden Lochelemente 9, 10 vollständig. Die restlichen Lochelemente 11, 12 werden zumindest von Teilen der ersten Strömungsteile 75, 75' durchströmt. Die Lochelemente 9-12 sind jeweils an der äußeren Wandseite 5 der Strömungswand 80 und an der Behälterwand 17 befestigt. Vorstellbar ist auch, dass die Lochelemente 9-12 an der Oberseite des Abscheiders 50 oder an einer Führungshilfe befestigt sind, die direkt oberhalb der Lochelemente 9-12 verläuft.

Die beiden ersten Lochelemente 9, 10 berühren sich an der äußeren Wandseite 4 der Strömungswand 80 und bilden in der Aufsicht gemäß Fig. 1 einen Winkel von ca. 65° Grad zueinander. Das dritte Lochelement 11 in dem jeweiligen Strömungskanal 70, 71 befindet sich in einem Abstand zu den ersten beiden Lochelementen 9, 10. Der Winkel des dritten Lochelements 11 in Bezug auf die Strömungsrichtung des Gemisches in dem jeweiligen Strömungskanal 70, 71 ist größer als der entsprechende Winkel der ersten beiden Lochelemente 9, 10.

Das vierte Lochelement 12 ist in einem größeren Abstand zu dem dritten Lochelement 11 angeordnet im Vergleich zu dem Abstand von dem dritten Lochelement 11 zu dem zweiten Lochelement 10. Der Winkel des vierten Lochelements 12 bezüglich der Strömungsrichtung der ersten Strömungsteile 75, 75' ist jeweils größer als der entsprechende Winkel des dritten Lochelements 11 und der ersten und zweiten Lochelemente 9, 10. Die Lochelemente 9-12 weisen vom Zulauf 1 entlang der Strömungsrichtung des Gemisches eine jeweils zunehmende Länge auf.

Auf der zweiten Seite 53 des Behälters ist ein hinterer Abscheidebereich 3 angeordnet, in dem die beiden ersten Strömungsteile 75, 75' mit im Wesentlichen entgegengesetzten Strömungsrichtungen aufeinandertreffen und somit wiedervereinigt werden. Die beiden ersten Strömungsteile 75, 75' bzw. die wiedervereinigten ersten Strömungsteile 75, 75' bilden eine oder mehrere rotierende Strömungen in diesem hinteren Abscheidebereich 3 aus.

Dieser hintere Abscheidebereich 3 befindet sich im Wesentlichen zwischen der Öffnung 83 der Strömungswand 80 und der zweiten Seite 53 des Abscheiders 50. Von diesem hinteren Abscheidebereich 3 fließen die wiedervereinigten ersten Strömungsteile 75, 75' in den Innenraum 2 des Behälters, der sich zwischen den inneren Wandseiten 5 der Strömungswand 80 befindet. Zwischen den äußeren Wandseiten 4 und der Behälterwand 17 befindet sich der Außenraum 45 des Behälters.

Der Abscheider umfasst zudem einen Ablauf 14 mit einer Ablaufrohrleitung 15. Der Ablauf 14 befindet sich im Wesentlichen in der Mitte des Behälters bzw. zwischen der Mitte des Behälters und der zweiten Seite 53 des Abscheiders 50. An dem Ablauf 14 ist auf zwei gegenüberliegenden Seiten des Ablaufs 14 jeweils ein Strömungselement 6 angeordnet. Die Strömungselemente 6 bilden einen Winkel von ca. 130 Grad zueinander. Durch die beiden Strömungselemente 6 bildet sich jeweils ein Verengungsbereich 7, 7' zwischen den Strömungselementen 6 und der Strömungswand 80 an der Öffnung 83 der Strömungswand 80.

Durch die Strömungselemente 6 werden die wiedervereinigten ersten Strömungsteile 75, 75' erneut in zwei ungefähr gleich große zweite Strömungsteile 76, 76' aufgeteilt. Das Gemisch strömt in Form zweier zweiter Strömungsteile 76, 76' durch die Verengungsbereiche 7, 7' und zu großen Teilen am Ablauf 14 vorbei. Die beiden zweiten Strömungsteile 76, 76' werden hauptsächlich durch die Strömungselemente 6 entlang der inneren Wandseite 5 der Strömungswand 80 in Richtung auf die erste Seite 52 des Behälters bzw. in Richtung des Zulaufs 1 geführt.

An der inneren Wandseite 5 der Strömungswand 80 an der ersten Seite 52 des Behälters treffen die zweiten Strömungsteile 76, 76' mit im Wesentlichen entgegengesetzten Strömungsrichtungen aufeinander und werden wiedervereinigt. Auch hier können sich rotierende Strömungen ausbilden. Von hier strömt das Gemisch in Richtung der zweiten Seite 53 des Abscheiders 50 in Richtung auf den Ablauf 14. Um den Ablauf 14 ist ein runder Grobschmutzfang 18 angeordnet. Der Grobschmutzfang kann auch eine rechteckige oder ellipsoide Form aufweisen. Weitere Formen sind vorstellbar.

Der Abscheider 50 ist bezüglich einer Ebene, die durch den Zulauf 1 und den Ablauf 14 verläuft, im Wesentlichen spiegelsymmetrisch ausgebildet.

Fig. 2 zeigt eine Seitenansicht der Ausführungsform eines erfindungsgemäßen Abscheiders 50 aus Fig. 1. Die gepunkteten Linien zwischen den einzelnen Figuren verdeutlichen die räumlichen Beziehungen zwischen den Bauteilen in den einzelnen Ansichten. Das Gemisch strömt durch den Zulauf 1 in eine sich unterhalb der Unterkante 65 des Zulaufs 1 befindlichen Einlaufschikane 60 in den Behälter. Der Strömungskanal 70, 71 ist im Bereich von der ersten Seite des Behälters 52 bzw. des Zulaufs 1 bis zum zweiten Lochelement 10 durch ein Begrenzungselement 19, beispielsweise einem Bodenblech, nach unten abgeschlossen. Dieser nach unten geschlossene Bereich entspricht jeweils ca. einem Drittel des jeweiligen Strömungskanals 70, 71.

Ein oberer Teil zumindest der ersten beiden Lochelemente 9, 10 befindet sich oberhalb der Unterkante 65 des Zulaufs 1. Hierdurch bildet sich zwischen dem Zulauf 1 und dem ersten Lochelement 9 bzw. den ersten Lochelementen 9, 10 eine rotierende Strömung in dem Bereich oberhalb der Unterkante 65 des Zulaufs 1 aus. In diesem Bereich 8 sammeln sich durch die rotierende Strömung größere Öltropfen an und verbleiben in diesem Bereich 8. Eine Abscheidung von Feststoffen findet in diesem Bereich 8 weitgehend nicht statt.

Nach dem zweiten Lochelement 10 sind die Strömungskanäle 70, 71 jeweils nach unten hin offen, so dass das Gemisch auch durch den sich unterhalb der restlichen Lochelemente 11, 12 befindlichen Bereich strömen kann. Hierdurch wächst der Strömungsquerschnitt des Gemisches, wodurch die Fließgeschwindigkeit sich verringert. Somit können sich sedimentierbare Feststoffe in diesem nach unten hin offenen Bereich leicht absetzen.

Die Lochelemente 9-12 erstrecken sich nur über einen Teil der Höhe des Abscheiders 50. Somit kann das Gemisch auch unterhalb der dritten und vierten Lochelemente 11, 12 entlang strömen.

Unterhalb der Lochelemente 9-12 ist ein Schlammsammelraum 16 angeordnet. Der Schlammsammelraum 16 erstreckt sich über die komplette Breite des Abscheiders 50. Vorstellbar ist auch, dass der Schlammsammelraum 16 sich nur über einen Teil der Breite des Abscheiders 50 erstreckt. In dem Schlammsammelraum 16 können sich Feststoffe absetzen und ansammeln. Das Strömungsverhalten der Leichtflüssigkeit bzw. der Feststoffe ist in Fig. 2 durch (schräg) nach oben bzw. (schräg) nach unten zeigende Pfeile angedeutet. Durch das oleophile Material, vorzugsweise PE-HD der Lochelemente 9-12 verbinden sich feine Öltröpfchen zu größeren Tropfen und schwimmen auf dem Wasser bzw. auf dem Gemisch auf. PE-HD bezeichnet ein Polyethylen mit schwach verzweigten Polymerketten und somit mit einer hohen Dichte. Andere Arten von oleophilen bzw. lipophilen Materialen sind vorstellbar. Auch denkbar ist, dass die Lochelemente 9-12 selbst aus einem nicht-oleophilen Material bestehen und nur eine Lackierung bzw. einen Überzug aus einem oleophilen Material aufweisen.

Fig. 3 zeigt eine weitere Seitenansicht der Ausführungsform eines erfindungsgemäßen Abscheiders 50 aus den Fig. 1 und Fig. 2. Die Seitenansicht der Fig. 3 zeigt hauptsächlich den Innenraum 2 des Abscheiders 50. Deutlich zu erkennen ist der im Wesentlichen zylindrische Schmutzfang 18, der um den im Wesentlichen zylindrischen Ablauf 14 herum angeordnet ist. Mit "0-WSP" ist die Höhe eingezeichnet, in der das Gemisch zugeführt wird (sogenannter Nullwasserspiegel). Der Ablauf 14 bzw. das Ablaufrohr 15 des Ablaufs 14 befindet sich auf im Wesentlichen gleicher Höhe wie der Zulauf 1. In Fig. 3 sind die Strömungswand 80 sowie die Strömungselemente 6 nicht gezeigt.

Der Ablauf 14 umfasst ein sich unterhalb des Grobschmutzfanges 18 erstreckendes Anschlussstück 30, das siphonförmig bzw. U-förmig ausgebildet ist. Der Ablauf 14 befindet sich zu großen Teilen unterhalb des Betriebswasserspiegels des Gemisches. Da die Leichtflüssigkeit, insbesondere Öl, durch den Abscheider weitgehend vom Wasser getrennt wurde, schwimmt die Leichtflüssigkeit zu großen Teil auf dem Wasser auf. Somit wird durch den Ablauf 14 bzw. das U-förmige Anschlussstück 30, das von dem unteren Ende des Ablaufs 14 bzw. des Schmutzfangs 18 siphonförmig verläuft, im Wesentlichen nur Wasser abgeführt. Die Leichtflüssigkeit verbleibt in dem Abscheider 50.

Von dem Anschlussstück 30 gelangt das abgeführte Wasser in die Ablaufrohrleitung 15 und wird aus dem Abscheider 50 geführt, beispielsweise in die Kanalisation. In dem Ablauf 14 kann ein Schwimmer (nicht gezeigt) angeordnet sein, der eine derartige spezifische Dichte aufweist, dass er in bzw. auf Wasser schwimmt, aber nicht in bzw. auf Öl. Somit sinkt der Schwimmer in dem Ablauf 14 ab, wenn sich zuviel Öl an dem Ablauf 14 bzw. auf dem Wasser befindet. Durch das Absinken verschließt der Schwimmer den Ablauf 14.

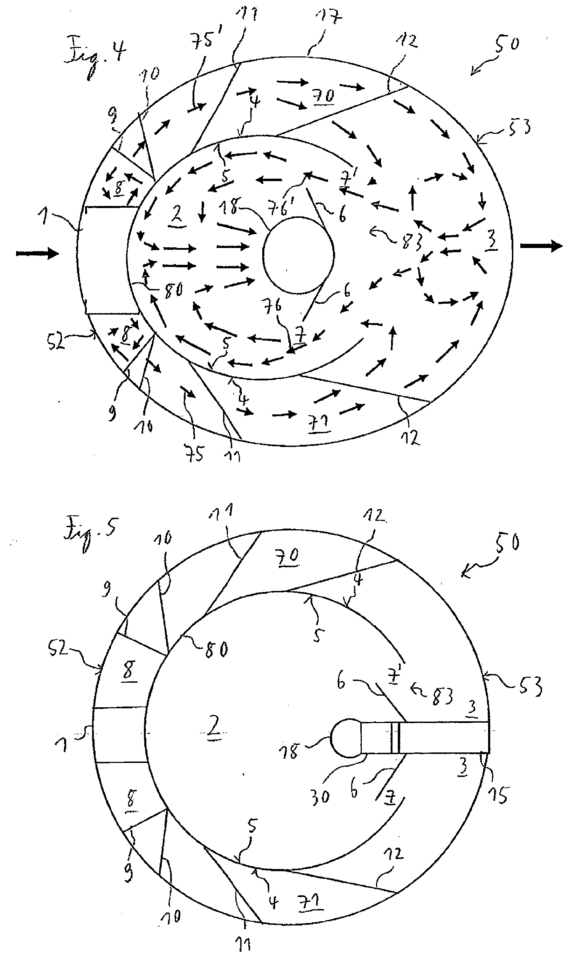

Fig. 4 zeigt eine Aufsicht mit dem Strömungsverhalten des Gemisches in der Ausführungsform eines erfindungsgemäßen Abscheiders 50 aus Fig. 1-3. Das Strömungsverhalten des Gemisches ist für einen kreisrunden Behälter durch Pfeile gezeigt. Das Strömungsverhalten ca. 15 cm unterhalb des Betriebswasserspiegels ist ohne Darstellung des Ablaufrohrs 15 in Fig. 4 dargestellt.

Das Gemisch gelangt durch den Zulauf 1 an der ersten Seite 52 des Abscheiders 50 in den Behälter. Nach dem Aufteilen des Gemisches in zwei im Wesentlichen gleich große erste Strömungsteile 75, 75' wird das Wasser durch zwei Strömungskanäle 70, 71 geleitet. In dem Bereich zwischen dem Zulauf 1 und dem ersten Lochelement 9 bildet sich im oberen Bereich oberhalb der Unterkante 65 des Zulaufs 1 eine rotierende Strömung, wodurch sich größere Öltropfen bereits hier vom Wasser trennen.

Die beiden ersten Strömungsteile 75, 75' werden von der Strömungswand 80 und der Behälterwand 17 in den hinteren Abscheidebereich 3 geleitet. In diesem Bereich 3 treffen die beiden ersten Strömungsteile 75, 75' mit im Wesentlichen entgegengesetzten Strömungsrichtungen aufeinander und werden wiedervereinigt. Hierbei können sich eine oder mehrere rotierende Strömungen bilden. Von diesem hinteren Abscheidebereich 3 gelangt das Gemisch in den inneren Abscheideraum 2. Durch die Strömungselemente 6 wird das Gemisch, das aus den wiedervereinigten ersten Strömungsteilen 75, 75' besteht, erneut in zwei ungefähr gleich große zweite Strömungsteile 76, 76' aufgeteilt. Diese beiden zweiten Strömungsteile 76, 76' durchlaufen jeweils einen Verengungsbereich 7, 7' und werden an der inneren Wandseite 5 der Strömungswand 80 entlang geführt in Richtung auf den Zulauf 1. An der inneren Wandseite 5 der Strömungswand 80 an der ersten Seite 52 des Abscheiders 50 treffen die beiden zweiten Strömungsteile 76, 76' mit im Wesentlichen entgegengesetzten Strömungsrichtungen aufeinander und wiedervereinigen sich. Von hier strömt das Gemisch wieder vom Zulauf 1 weg in Richtung auf die zweite Seite 53 des Abscheiders 50 und das Wasser fließt durch den Grobschmutzfang 18 in den Ablauf 14.

Fig. 5 zeigt eine Aufsicht auf eine weitere Ausführungsform eines erfindungsgemäßen Abscheiders 50. Der Abscheider 50 der Fig. 5 ist sehr ähnlich zu dem Abscheider 50 der Fig. 1-4 ausgebildet. Der Abscheider 50 der in Fig. 5 gezeigten Ausführungsform ist jedoch im Querschnitt kreisförmig. Der Ablauf 14 ist im Vergleich zu der in den Fig. 1-4 gezeigten Ausführungsform weiter von der Mitte des Abscheiders 50 entfernt und hin zu der zweiten Seite 53 verschoben.

Der Zulauf 1 weist eine Breite von ca. 210 mm auf. Die ersten zwei Lochelemente 9, 10 sind jeweils in einem Abstand von ca. 445 mm von dem Zulauf 1 entfernt angeordnet. Die Entfernung der Lochelemente 9-12 bezieht sich jeweils auf die Entfernung zwischen der Mitte des Zulaufs 1 an der Behälterwand 17 und dem Punkt an der äußeren Wandseite 4 der Strömungswand 80, an dem das jeweilige Lochelement 9-12 die Strömungswand 80 berührt. Das dritte Lochelement 11 ist in einem Abstand von ca. 690 mm angeordnet. Das vierte Lochelement 12 ist in einem Abstand von ca. 850 mm angeordnet.

Die Entfernungen der Lochelemente 9-12 von der Mitte des Zulaufs 1 zu dem Punkt an der Behälterwand 17, an dem das jeweilige Lochelement 9-12 die Behälterwand 17 berührt, betragen jeweils ca. 445 mm, ca. 770 mm, ca. 1060 mm und ca. 1275 mm. Die Lochelemente 9-12 weisen eine Höhe von ca. 600 und Breite bis zu ca. 200 mm auf. Die Löcher haben jeweils einen Abstand in horizontaler wie vertikaler Richtung von ca. 15 mm zueinander.

Der Ablauf 14 weist einen Abstand von ca. 855 mm zu dem Zulauf 1 auf. Die Länge der Strömungselemente 6 beträgt ca. 200 mm. Die Öffnung 83 der Strömungswand 80 weist im Querschnitt eine Breite von ca. 450 mm auf. Die Strömungskanäle 71, 71' weisen jeweils eine Breite von ca. 250 mm auf.

Der Abstand zwischen der Oberkante des Zulaufs 1 und dem oberen Ende des Schlammsammelraums 16 beträgt ca. 800 mm. Zwischen dem oberen Ende des Schlammsammelraums 16 und dem unteren Ende des Ablaufs 14 bzw. dem unteren Ende des Grobschmutzfangs 18 beträgt der Abstand ca. 225 mm. Der Durchmesser des Grobschmutzfangs 18 bzw. des Ablaufs 14 beträgt ca. 300 mm.

Der Abstand zwischen dem Grobschmutzfang 18 und der Behälterwand 17 auf der zweiten Seite 53 des Abscheiders 50 beträgt ca. 450 mm. Der Grobschmutzfang 18 weist Löcher mit einem Zwischenabstand in horizontaler wie in vertikaler Richtung von ca. 15 mm auf. Der Zulauf 1 sowie der Hauptschmutzfang 18 weisen einen Abstand von mindestens 660 mm zu der Decke des Abscheiders 50 auf. Andere Größen bzw. Abstände sind vorstellbar.

Der Abscheider ist ein Koaleszenzabscheider gemäß der europäischen Norm EN 858 mit Kohlenwasserstoffgehalten von weniger als 5 mg/l im Ablauf gemäß Testaufbau nach DIN EN 858.

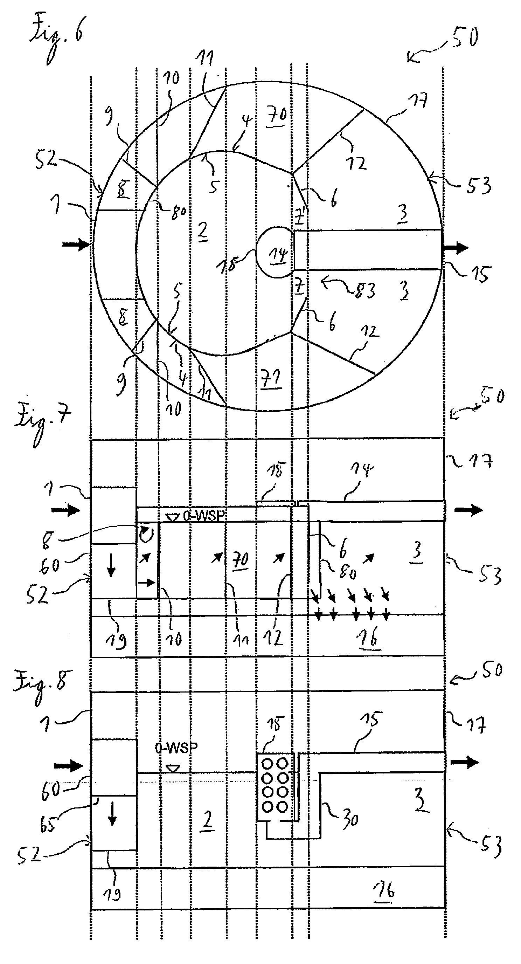

Fig. 6 zeigt eine Aufsicht auf eine weitere Ausführungsform eines erfindungsgemäßen Abscheiders 50. Die in Fig. 6 gezeigte Ausführungsform unterscheidet sich von der in den Fig. 1-4 gezeigten Ausführungsform hauptsächlich durch die Anordnung der Strömungselemente 6 und die Anordnung der zweiten Lochelemente 10.

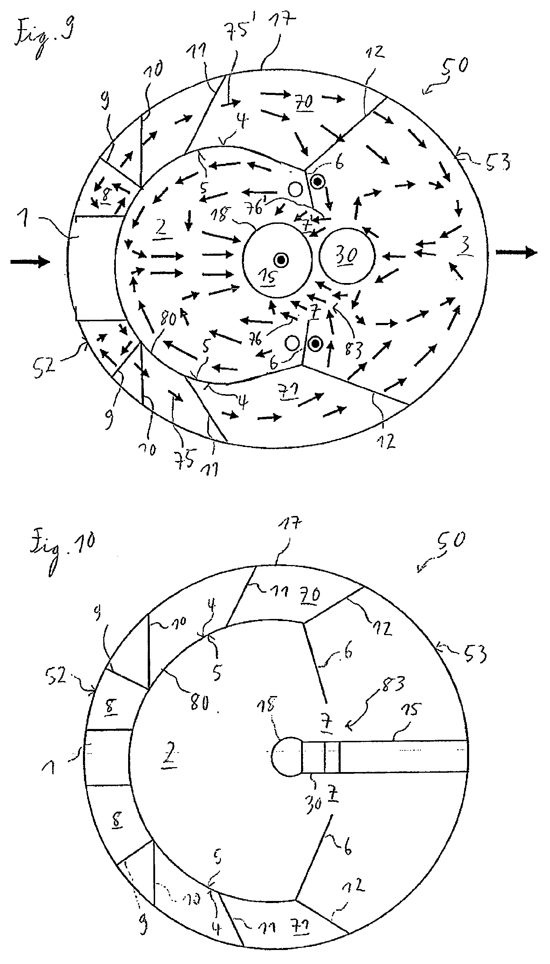

Die Strömungselemente 6 sind an den Enden der Strömungswand 80, d.h. an der Öffnung 83 der Strömungswand 80 angeordnet. Sie bilden jeweils einen Winkel von ca. 90 Grad zu dem vierten Lochelement 12. Die Strömungselemente 6 führen einen Teilstrom des Gemisches von dem hinteren Abscheidebereich 3 in den Ablauf 14. Durch die Verengungsbereiche 7, 7', welche durch die Strömungselemente 6 und das senkrechte Anschlussstück 30 vom Ablauf 14 zur Ablaufrohrleitung 15 gebildet werden und welche den direkten Zufluss auf den Ablauf stark reduzieren, ergibt sich eine nach unten, unterhalb der Strömungselemente 6 verlaufende Strömung. Die Strömung nach unten bzw. nach oben ist durch Kreise mit einem inneren Punkt bzw. ohne einen solchen Punkt, d.h. mit einen leeren Kreis, in Fig. 9 dargestellt. Der Teil des Gemisches, der unterhalb der Strömungselemente 6 geleitet wird, strömt auf der dem Innenraum 2 zugewandten Seite der Strömungselemente 6 in den Innenraum 2 und verteilt sich in diesem. Jeweils ein Teilstrom des Gemisches strömt entlang der inneren Wand 5 der Strömungswand 80 und ein Teilstrom des Gemisches strömt direkt in den Ablauf 14. Durch diese Art der Strömungsführung im hinteren Abscheidebereich 3 und im Innenraum 2 des Abscheiders wird erreicht, dass zum einen das gesamte Gemisch bzw. ein signifikanter Teilstrom hiervon einen sehr langen Fließweg zurücklegen muss.

Die Strömungswand 80 durchläuft etwas mehr als ca. die Hälfte eines Vollkreises, d.h. ca. 190°, und weist somit eine Öffnung 83 auf. Bei Durchlaufen der Strömungswand 80 von ca. 190° weist die Öffnung somit einen Winkel von ca. 80° auf. Die Öffnung 83 ist einer dem Zulauf 1 gegenüberliegenden zweiten Seite 53 des Abscheiders 50 zugewandt.

Das zweite Lochelement 10 bildet einen Winkel von ca. 65° relativ zum ersten Lochelement 9. Größere oder kleinere Winkel sind vorstellbar. Die beiden Lochelemente 9, 10 bilden einen Strömungswiderstand für die beiden ersten Strömungsteile 75, 75'.

Fig. 7 zeigt eine Seitenansicht der weiteren Ausführungsform eines erfindungsgemäßen Abscheiders 50 aus Fig. 6. Unterschiedlich zu der in Fig. 2 gezeigten Ausführungsform ist, dass bei der in Fig. 7 gezeigten Ausführungsform der jeweilige Strömungskanal 70, 71 von dem Zulauf 1 bis zu dem vierten Lochelement 12 nach unten durch ein Begrenzungselement 19 abgeschlossen bzw. begrenzt ist. Somit fällt der grobe Schlamm, der sich teilweise auch in diesen Führungskanälen 70, 71 absetzt, nach dem Ende der Führung direkt in den unterhalb befindlichen Schlammsammelraum 16. Ein weiterer Teil des feinen Schlamms sedimentiert in dem hinteren Abscheidebereich 3 und fällt ebenfalls in den Schlammsammelraum 16. Auch in dem inneren Abscheidebereich sedimentiert ein Teil des feinen Schlamms, insbesondere an der Stelle, an der die beiden zweiten Strömungsteile 76, 76' aufeinandertreffen und sich wiedervereinigen. Hierdurch sinkt die Strömungsgeschwindigkeit und Feststoffe können leichter sedimentieren.

In Fig. 8 ist eine weitere Seitenansicht der weiteren Ausführungsform eines erfindungsgemäßen Abscheiders 50 aus Fig. 6 und Fig. 7.

Fig. 9 zeigt eine Aufsicht mit dem Strömungsverhalten des Gemisches in der weiteren Ausführungsform 50 eines erfindungsgemäßen Abscheiders aus Fig. 6-8. Das Strömungsverhalten des Gemisches von dem Zulauf 1 bis zu der Öffnung 83 der Strömungswand 80 entspricht im Wesentlichen dem der in Fig. 4 gezeigten Ausführungsform. Im hinteren Abscheidebereich 3 treffen die beiden ersten Strömungsteile 75, 75' aufeinander.

Durch Verengungsbereiche 7, 7', die zwischen dem Anschlussstück 30 des Ablaufs 14 und den beiden Strömungselementen 6 gebildet sind, strömt das Gemisch in den Innenraum 2 des Abscheiders 50. Durch diese Verengung des Strömungsquerschnitts wird ein Teil der zweiten Strömungsteile 76, 76' nach unten geleitet und strömt unterhalb der Strömungselemente 6 entlang. Auf der dem Innenraum 2 zugewandten Seite der Strömungselemente 6 strömt dieser Teil wieder nach oben. Ein Teil dieses Strömungsteils und des Gemisches, das durch die Verengungsbereiche 7, 7' geströmt ist, strömt direkt zu dem Ablauf 14. Ein anderer Teil der Strömungsteile strömt entlang der Innenwand 5 der Strömungswand 80 in Richtung des Zulaufs 1 bzw. der ersten Seite 52 des Abscheiders 50. An der Innenwand 5 der Strömungswand 80 an der ersten Seite 52 des Abscheiders 50 treffen diese Teile der zweiten Strömungsteile 76, 76' mit im Wesentlichen entgegengesetzten Strömungsrichtungen aufeinander und wiedervereinigen sich. Dieser Teil des Gemisches, der wiedervereinigt wurde, gelangt von hier zu dem Ablauf 14.

Fig. 10 zeigt eine Aufsicht auf eine weitere Ausführungsform eines erfindungsgemäßen Abscheiders 50. Die in Fig. 10 gezeigte Ausführungsform des erfindungsgemäßen Abscheiders 50 unterscheidet sich von der in Fig. 6 gezeigten Ausführungsform dadurch, dass der Behälter im Querschnitt kreisförmig ist und dass die Strömungswand 80 im Querschnitt einen Teil eines Kreises bildet.

Die ersten zwei Lochelemente 9, 10 sind jeweils in einem Abstand von ca. 290 mm von dem Zulauf 1 entfernt angeordnet. Die Entfernung der Lochelemente 9-12 bezieht sich jeweils auf die Entfernung zwischen der Mitte des Zulaufs 1 an der Behälterwand 17 und dem Punkt an der äußeren Wandseite 4 der Strömungswand 80, an den das jeweilige Lochelement 9-12 die Strömungswand 80 berührt. Das dritte Lochelement 11 ist in einem Abstand von ca. 490 mm angeordnet. Das vierte Lochelement 12 ist in einem Abstand von ca. 650 mm angeordnet.

Die Entfernungen der Lochelemente 9-12 von der Mitte des Zulaufs 1 zu dem Punkt an der Behälterwand 17, an dem das jeweilige Lochelement 9-12 die Behälterwand 17 berührt, betragen jeweils ca. 290 mm, ca. 470 mm, ca. 680 mm und ca. 860 mm. Die Lochelemente 9-12 weisen eine Höhe von ca. 560 und Breite bis zu ca. 200 mm auf.

Der Ablauf 14 weist einen Abstand von ca. 470 mm zu dem Zulauf 1 auf. Die Öffnung 83 der Strömungswand 80 weist im Querschnitt eine Breite von ca. 615 mm auf. Die Strömungskanäle 71, 71' weisen jeweils eine Breite von ca. 145 mm auf. Der Abstand zwischen der Oberkante des Zulaufs 1 und dem oberen Ende des Schlammsammelraums 16 beträgt ca. 920 mm. Der Zulauf 1 sowie der Hauptschmutzfang 18 weisen einen Abstand von mindestens 410 mm zu der Decke des Abscheiders 50 auf. Andere Größen bzw. Abstände sind vorstellbar.

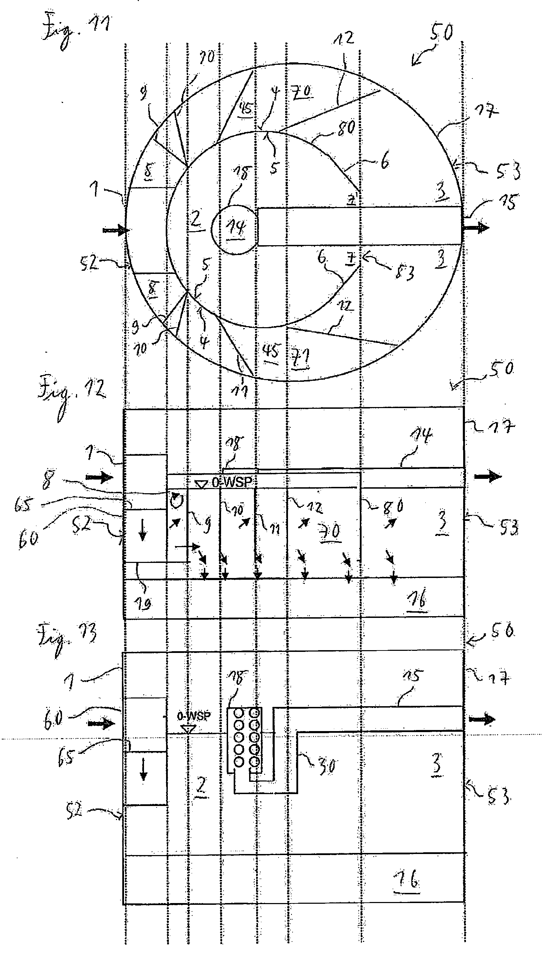

Fig. 11 zeigt eine Aufsicht auf eine weitere Ausführungsform eines erfindungsgemäßen Abscheiders 50. Bei dieser Ausführungsform sind die Strömungselemente 6 als Verlängerung der Strömungswand 80 an der Strömungswand 80 bzw. an der Öffnung 83 der Strömungswand 80 angeordnet. Der Ablauf 14 ist zwischen der Mitte des Behälters des Abscheiders 50 und dem Zulauf 1 angeordnet.

Die Strömungswand 80 durchläuft etwas mehr als die Hälfte eines Vollkreises, d.h. ca. 200°, und weist somit eine Öffnung 83 auf. Bei Durchlaufen der Strömungswand 80 von ca. 200° weist die Öffnung somit einen Winkel von ca. 160° auf. Die Öffnung 83 ist einer dem Zulauf 1 gegenüberliegenden zweiten Seite 53 des Abscheiders 50 zugewandt.

Fig. 12 zeigt eine Seitenansicht der weiteren Ausführungsform eines erfindungsgemäßen Abscheiders aus Fig. 11. Das Begrenzungselement 19 endet bereits nach dem ersten Lochelement 9. Vorstellbar ist jedoch auch, dass das Begrenzungselement 19 erst nach dem in Strömungsrichtung zweiten Lochelement 10 endet.

Fig. 13 zeigt, dass bei dieser Ausführungsform der Abstand zwischen der Unterkante 65 des Zulaufs 1 bzw. der Zulaufschikane 60 sowie der Unterkante des Ablaufs 14 bzw. des Anschlussstücks 30 des Ablaufs 14 und dem Schlammsammelraum 16 größer ist als bei den zuvor gezeigten Ausführungsformen. Der Zulauf 1 und der Ablauf 14 befinden sich jedoch ebenfalls auf im Wesentlichen der gleichen Höhe.

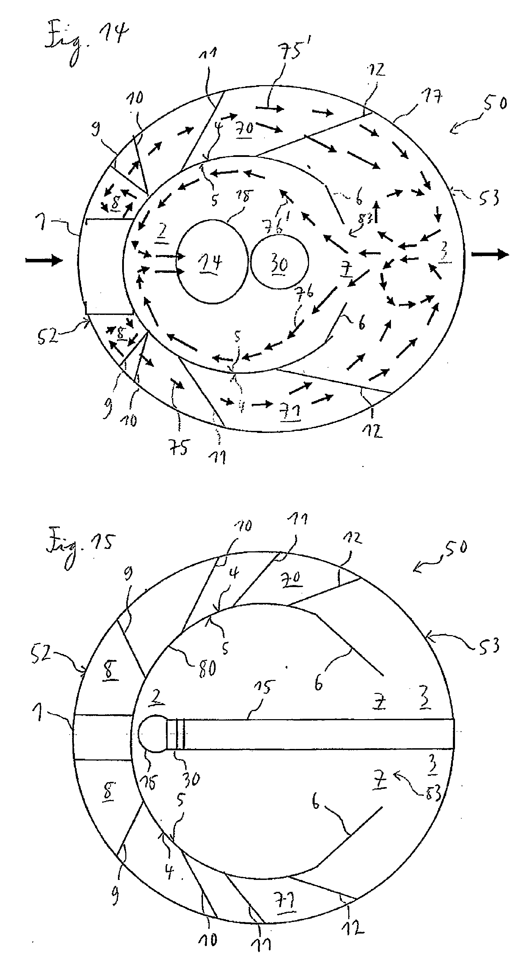

In Fig. 14 ist eine Aufsicht mit dem Strömungsverhalten des Gemisches in der weiteren Ausführungsform eines erfindungsgemäßen Abscheiders aus Fig. 11-13. Das Gemisch strömt in zwei ersten Strömungsteilen 75, 75' ähnlich wie bei den zuvor gezeigten Ausführungsformen von dem Zulauf 1 zu dem hinteren Abscheidebereich 3. Durch die Anordnung der Strömungselemente 6 entsteht hier eine bzw. mehrere rotierende Strömungen. Durch die zwischen den Strömungselementen 6 gebildeten Verengungsbereiche 7, 7' strömen die zweiten Strömungsteile 76, 76', die etwa gleich groß sind und aus dem wiedervereinigten Gemisch gebildet wurden, in den Innenraum 2 des Abscheiders 50. Hier strömen sie entlang der inneren Wandseite 4 der Strömungswand 80 zu dem Zulauf 1 bzw. zu der ersten Seite 52 des Abscheiders 50. Hier treffen die beiden zweiten Strömungsteile 76, 76' mit im Wesentlichen entgegengesetzten Strömungsrichtungen wieder aufeinander und wiedervereinigen sich. Von hier fließt das Gemisch in Richtung des Ablaufs 14.

Fig. 15 zeigt eine weitere Aufsicht auf eine weitere Ausführungsform eines erfindungsgemäßen Abscheiders 50. Der Abscheider 50 weist im Querschnitt eine kreisförmige Form auf. Die Strömungswand 80 weist ebenfalls eine kreisförmige Form auf. Der Ablauf 14 bzw. der Grobschmutzfang 18, der um den Ablauf 14 angeordnet ist, befindet sich näher an dem Zulauf 1 als an der Mitte des Abscheiders 50.

Die Lochelemente 9 bis 12 sind an anderen Positionen als bei den vorher gezeigten Ausführungsformen angeordnet. Das in Strömungsrichtung der jeweiligen ersten Strömungsteile 75, 75' angeordnete erste Lochelement 9 befindet sich nach ca. 1/10 des Vollkreises vom Zulauf 1 aus gesehen. Der Abstand zwischen dem Zulauf 1 und dem ersten Lochelement 9 entspricht im Wesentlichen dem Abstand zwischen dem zweiten Lochelement 10 und dem ersten Lochelement 9. Das zweite Lochelement 10 weist einen größeren Winkel zu der Strömungsrichtung des jeweiligen ersten Strömungsteils 75, 75' auf. In einem weiteren Abstand, der dem Abstand zwischen dem ersten 9 und zweiten 10 Lochelement entspricht, ist ein drittes Lochelement 11 angeordnet. Dieses weist jeweils einen ähnlichen Winkel wie das zweite Lochelement 10 zu der Strömungsrichtung der ersten Strömungsteile 75, 75' auf. Das vierte Lochelement 12 ist in einem ähnlichen Abstand zu dem dritten Lochelement 11 wie das dritte Lochelement 11 zu dem zweiten Lochelement 10 angeordnet und weist einen größeren Winkel zu der Strömungsrichtung der ersten Strömungsteile 75, 75' auf als jeweils die ersten drei Lochelemente 9 bis 11.

Der Zulauf weist eine Breite von ca. 280 mm auf. Das Lochelement 9 ist in einem Abstand von ca. 600 mm von dem Zulauf 1 entfernt angeordnet. Die Entfernung der Lochelemente 9-12 bezieht sich jeweils auf die Entfernung zwischen der Mitte des Zulaufs 1 an der Behälterwand 17 und dem Punkt an der äußeren Wandseite 4 der Strömungswand 80, an den das jeweilige Lochelement 9-12 die Strömungswand 80 berührt. Das zweite Lochelement 10 ist in einem Abstand von ca. 805 mm angeordnet. Das dritte Lochelement 11 ist in einem Abstand von ca. 1070 mm angeordnet. Das vierte Lochelement 12 ist in einem Abstand von ca. 1340 mm angeordnet.

Die Entfernungen der Lochelemente 9-12 von der Mitte des Zulaufs 1 zu dem Punkt an der Behälterwand 17, an dem das jeweilige erste, zweite und vierte Lochelement 9, 10, 12 die Behälterwand 17 berührt, betragen jeweils ca. 760 mm, ca. 1345 mm und ca. 1910 mm. Die Lochelemente 9-12 weisen eine Höhe von ca. 670 mm und Breite bis zu ca. 550 mm auf. Die Löcher haben jeweils einen Abstand in horizontaler wie vertikaler Richtung von ca. 15 mm zueinander.

Der Ablauf 14 weist einen Abstand von ca. 630 mm zu dem Zulauf 1 auf. Die Öffnung 83 der Strömungswand 80 weist im Querschnitt eine Breite von ca. 680 mm auf. Die Strömungskanäle 71, 71' weisen jeweils eine Breite von ca. 380 mm auf. Der Grobschmutzfang 18 weist einen Durchmesser von ca. 268 mm auf. Andere Größen bzw. Abstände sind vorstellbar.

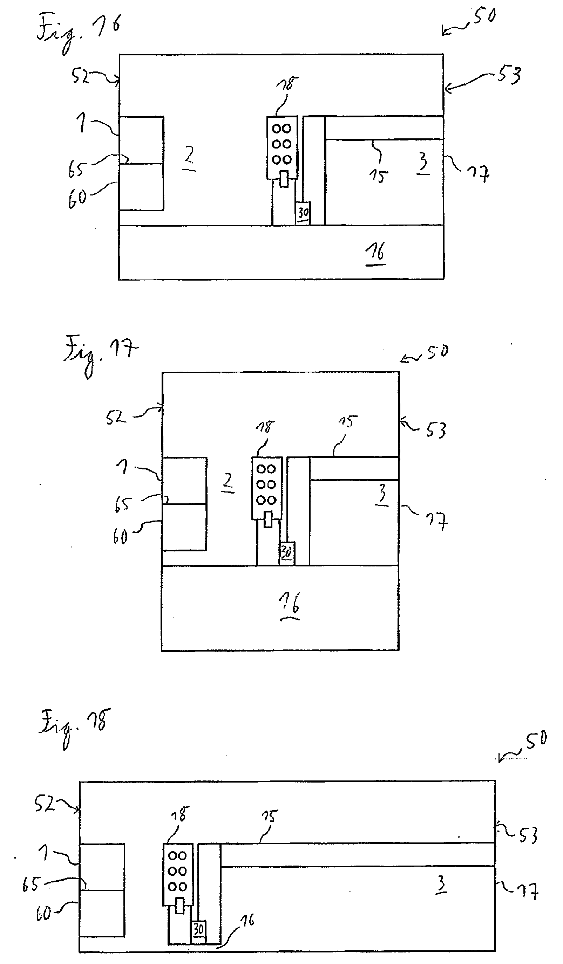

Fig. 16-18 zeigen Seitenansichten weiterer Ausführungsformen eines erfindungsgemäßen Abscheiders 18.

In Fig. 16 weist der Abscheider 50 im Querschnitt eine rechteckige Form auf. Der Ablauf 14 ist zwischen der Mitte des Abscheiders 50 und der zweiten Seite 53 des Abscheiders angeordnet. Das siphonförmige bzw. U-förmige Anschlussstück 30 des Ablaufs 14 verläuft teilweise an der Oberkante des Schlammsammelraums 16, der in dem unteren Fünftel der Höhe des Abscheiders 50 angeordnet ist. Die Länge des Abscheiders (Innenmaß) in Fig. 16 beträgt ca. 1500 mm.

In Fig. 17 weist der Abscheider 50 im Querschnitt eine annähernd quadratische Form auf. Der Ablauf 14 ist im Wesentlichen in der Mitte zwischen der ersten Seite 52 und der zweiten Seite 53 des Abscheiders angeordnet. Das siphonförmige bzw. U-förmige Anschlussstück 30 des Ablaufs 14 verläuft teilweise an der Oberkante des Schlammsammelraums 16, der in dem unteren Drittel der Höhe des Abscheiders 50 angeordnet ist. Die Länge des Abscheiders (Innenmaß) in Fig. 17 beträgt ca. 1000 mm.

In Fig. 18 weist der Abscheider 50 im Querschnitt eine langgezogene, rechteckige Form auf. Der Ablauf 14 ist nahe dem Zulauf 1 angeordnet, d.h. der Abstand des Ablaufs 14 zu dem Zulaufs 1 ist deutlich kleiner als der Abstand des Ablaufs 14 zu der Mitte des Abscheiders 50. Das siphonförmige bzw. U-förmige Anschlussstück 30 des Ablaufs 14 verläuft teilweise an der Oberkante des Schlammsammelraums 16, der sehr klein ist bzw. so gut wie nicht mehr vorhanden ist. Die Länge des Abscheiders (Innenmaß) in Fig. 18 beträgt ca. 2200 mm.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste:

- 1: Zulauf
- 2: Abscheideinnenraum
- 3: Hinterer Abscheidebereich
- 4: äußere Wandseite der Strömungswand
- 5: innere Wandseite der Strömungswand
- 6: Strömungselemente
- 7, 7': Verengungsbereich
- 8: Abscheidebereich großer Öltropfen
- 9: Erstes Lochelement in Strömungsrichtung
- 10: Zweites Lochelement in Strömungsrichtung
- 11: Drittes Lochelement in Strömungsrichtung
- 12: Viertes Lochelement in Strömungsrichtung
- 14: Ablauf
- 15: Ablaufrohrleitung
- 16: Schlammsammelraum
- 17: Behälterwand
- 18: Grobschmutzfang
- 19: Begrenzungselement (Bodenblech)
- 30: Anschlussstück vom Ablauf zur Ablaufrohrleitung
- 45: Abscheideaußenraum
- 50: Abscheider
- 52: erste Seite des Behälters
- 53: zweite Seite des Behälters
- 60: Zulaufschikane
- 65: Unterkante Zulauf
- 70: erster Strömungskanal
- 71: zweiter Strömungskanal
- 75, 75': erste Strömungsteile
- 76, 76': zweite Strömungsteile
- 80: Strömungswand
- 83: Öffnung der Strömungswand

## Patentansprüche

1. Abscheider (50), der in einem im Querschnitt kreis- oder ellipsenförmigen Behälter mit einer Behälterwand (17) angeordnet ist, zum Trennen eines Leichtflüssigkeit-Wasser-Gemisches, beispielsweise von ölverschmutztem Wasser, umfassend:
einen an einer ersten Seite (52) des Behälters angeordneten Zulauf (1) mit einer Zulaufschikane (60), die das zugeführte Gemisch nach unten leitet und in zwei im Wesentlichen gleich große erste Strömungsteile (75, 75') teilt,
einen Ablauf (14) mit einem Ablaufrohr (15) zum Ableiten des Wassers,
eine im Querschnitt kreis- oder ellipsenförmige Strömungswand (80) mit einer inneren Wandseite (5) und einer äußeren Wandseite (4), wobei die Strömungswand (80) zumindest die Hälfte eines Vollkreises, vorzugsweise zumindest dreiviertel eines Vollkreises, durchläuft und eine Öffnung (83) aufweist, die einer dem Zulauf (1) gegenüberliegenden zweiten Seite (53) des Behälters zugewandt ist,
wobei die Strömungswand (80) zwischen der äußeren Wandseite (4) der Strömungswand (80) und der Behälterwand (17) zwei Strömungskanäle (70, 71) an zwei gegenüberliegenden Seiten der Behälterwand (17) jeweils von dem Zulauf (1) zu der zweiten Seite (53) des Behälters bildet, wobei in den Strömungskanälen (70, 71) jeweils einer der beiden ersten Strömungsteile (75, 75') von dem Zulauf (1) zu der zweiten Seite (53) des Behälters entlang der Behälterwand (17) derart geführt wird, dass die beiden ersten Strömungsteile (75, 75') an der zweiten Seite (53) des Behälters mit im Wesentlichen entgegen gesetzten Strömungsrichtungen aufeinandertreffen und wiedervereinigt werden,
und
in den beiden Strömungskanälen (70, 71) angeordnete Lochelemente (9-12), die von den beiden ersten Strömungsteilen (75, 75') durchströmt werden.

2. Abscheider nach Anspruch 1, wobei
der Ablauf (14) auf im Wesentlichen gleicher Höhe wie der Zulauf (1) angeordnet ist.

3. Abscheider (50) nach Anspruch 1 oder 2, wobei
zumindest das jeweils erste der Lochelemente (9) in Strömungsrichtung des jeweiligen ersten Strömungsteils (75, 75') in dem jeweiligen Strömungskanal (70, 71) derart angeordnet ist, dass sich ein Teil des ersten Lochelements (9) oberhalb einer Unterkante (65) des Zulaufs (1) befindet, zum Bilden einer rotierenden Strömung des jeweiligen ersten Strömungsteils (75, 75') zwischen dem sich oberhalb der Unterkante (65) des Zulaufs (1) befindlichen Teil des ersten Lochelements (9) und dem Zulauf (1).

4. Abscheider (50) nach einem der vorhergehenden Ansprüche, wobei an dem Ablauf (14), insbesondere an dem Ablaufrohr (15) des Ablaufs (14), Strömungselemente (6) zum erneuten Teilen der wiedervereinigten ersten Strömungsteile (75, 75') in zwei im Wesentlichen gleich große zweite Strömungsteile (76, 76') und zum Leiten der beiden zweiten Strömungsteile (76, 76') durch jeweils einen Verengungsbereich (7) und von der zweiten Seite (53) entlang der inneren Wandseite (5) der Strömungswand (80) in Richtung der ersten Seite (52) des Behälters angeordnet sind, wobei die beiden zweiten Strömungsteile (76, 76') mit im Wesentlichen entgegen gesetzten Strömungsrichtungen an der inneren Wandseite (5) der Strömungswand (80) an der ersten Seite (52) des Behälters aufeinandertreffen und wiedervereinigt werden.

5. Abscheider (50) nach einem der vorhergehenden Ansprüche, insbesondere nach einem der Ansprüche 1-4, wobei
an der Öffnung (83) der Strömungswand (80) als Verlängerung der Strömungswand (80) Strömungselemente (6) zur Erzeugung einer rotierenden Strömung der beiden ersten Strömungsteile (75, 75') und/oder der beiden wiedervereinigten ersten Strömungsteile (75, 75') an der zweiten Seite (53) des Behälters, zum erneuten Teilen der wiedervereinigten ersten Strömungsteile (75, 75') in zwei im Wesentlichen gleich große zweite Strömungsteile (76, 76') und zum Leiten der beiden zweiten Strömungsteile (76, 76') jeweils durch einen Verengungsbereich (7) und von der zweiten Seite (53) entlang der inneren Wandseite (5) der Strömungswand (80) in Richtung der ersten Seite (52) des Behälters angeordnet sind, wobei die beiden zweiten Strömungsteile (76, 76') mit im Wesentlichen entgegen gesetzten Strömungsrichtungen an der inneren Wandseite (5) der Strömungswand (80) an der ersten Seite (52) des Behälters aufeinandertreffen und wiedervereinigt werden.

6. Abscheider (50) nach einem der vorhergehenden Ansprüche, insbesondere nach einem der Ansprüche 1-4, wobei
an der Öffnung (83) der Strömungswand (80) Strömungselemente (6) angeordnet sind zum erneuten Teilen der wiedervereinigten ersten Strömungsteile (75, 75') in zwei im Wesentlichen gleich große zweite Strömungsteile (76, 76'), zum Leiten eines Teils der beiden zweiten Strömungsteile (76, 76') jeweils durch einen Verengungsbereich (7) und von der zweiten Seite (53) entlang der inneren Wandseite (5) der Strömungswand (80) in Richtung der ersten Seite (52) des Behälters und zum Leiten eines Teils der jeweiligen zweiten Strömungsteile (76, 76') unterhalb der Strömungselemente (6), wobei zumindest Teile der beiden zweiten Strömungsteile (76, 76') mit im Wesentlichen entgegen gesetzten Strömungsrichtungen an der inneren Wandseite (5) der Strömungswand (80) an der ersten Seite (52) des Behälters aufeinandertreffen und wiedervereinigt werden.

7. Abscheider (50) nach einem der vorhergehenden Ansprüche, wobei der Ablauf (14) im Wesentlichen in der Mitte des Behälters angeordnet ist.

8. Abscheider (50) nach einem der vorhergehenden Ansprüche, wobei der Abscheider (50) im Wesentlichen spiegelsymmetrisch bezüglich einer Ebene durch den Zulauf (1) und den Ablauf (14) ausgebildet ist.

9. Abscheider (50) nach einem der vorhergehenden Ansprüche, wobei ein, insbesondere runder, rechteckiger oder ellipsoider, Grobschmutzfang (18) um den Ablauf (14) angeordnet ist.

10. Abscheider (50) nach einem der vorhergehenden Ansprüche, wobei zumindest die Oberfläche der Lochelemente (9-12) und/oder der Strömungselemente (6) und/oder der inneren (5) und/oder der äußeren (4) Wandseite der Strömungswand (80) aus einem oleophilen Material, insbesondere PE-HD, besteht.

11. Abscheider (50) nach einem der vorhergehenden Ansprüche, wobei zumindest ein Teil des jeweiligen Strömungskanals (70, 71) in Richtung eines Bodens des Behälters durch ein Begrenzungselement (19) begrenzt ist.

12. Abscheider (50) nach einem der vorhergehenden Ansprüche, wobei
an einem Boden des Behälters ein Schlammsammelraum (16) angeordnet ist zum Aufnehmen und Sammeln von grobem Schlamm und/oder schweren Sedimenten.

13. Abscheider (50) nach einem der vorhergehenden Ansprüche, wobei mindestens eines der Lochelemente (9-12) und/oder der Strömungselemente (6) sich nur über einen Teil einer Höhe des Behälters erstrecken.

14. Verfahren zum Trennen eines Leichtflüssigkeit-Wasser-Gemisches, beispielsweise von ölverschmutztem Wasser, in einem Abscheider (50) mit einem Innenraum (2) und einem Außenraum (45) folgende Schritte umfassend:
Zuführen des Gemisches durch einen Zulauf (1) an einer ersten Seite (52) des Abscheiders (50),
Führen des Gemisches nach unten und aufteilen des Gemisches in zwei etwa gleichgroße erste Strömungsteile (75, 75') mittels einer Zulaufschikane (60),
Durchströmen der beiden ersten Strömungsteile (75, 75') durch mehrere Lochelemente (9-12) in zwei in dem Außenraum (45) angeordneten Strömungskanälen (70, 71),
Wiedervereinigen der beiden ersten Strömungsteile (75, 75') an einer der ersten Seite (52) gegenüberliegenden zweiten Seite (53) des Abscheiders (50) durch Aufeinandertreffen der beiden ersten Strömungsteile (75, 75') mit im Wesentlichen entgegen gesetzten Strömungsrichtungen,
Erneutes Aufteilen des Gemisches der beiden wiedervereinigten ersten Strömungsteile (75, 75') durch Strömungselemente (6) in zwei im Wesentlichen gleich große zweite Strömungsteile (76, 76') und Leiten der beiden zweiten Strömungsteile (76, 76') in den Innenraum (2) in Richtung auf den Zulauf (1),
Wiedervereinigen von zumindest Teilen der beiden zweiten Strömungsteile (76, 76') in dem Innenraum (2) an der ersten Seite (52) des Abscheiders (50) durch Aufeinandertreffen von zumindest Teilen der beiden zweiten Strömungsteile (76, 76') mit im Wesentlichen entgegen gesetzten Strömungsrichtungen,
und
Ableiten des Wassers aus dem Innenraum (2) durch einen Ablauf (14).

## Claims

1. Separator (50) arranged in a container of circular or elliptical cross-section and having a container wall (17) for separating a light liquid/water mixture such as for example oil-contaminated water, comprising:
an inlet (1) arranged at a first side (52) of the container and having an inlet baffle (60) which guides the supplied mixture downward and divides it into two flow portions (75, 75') of substantially equal size,
an outlet (14) having a drain pipe (15) for draining the water,
a flow wall (80) of circular or elliptical cross-section and having an inner wall side (5) and an outer wall side (4), wherein the flow wall (80) passes through at least half of a full circle, preferably at least three quarters of a full circle and exhibits an opening (83) facing a second side (53) of the container opposite the inlet (1),
wherein the flow wall (80), between the outer wall side (4) of the flow wall (80) and the container wall (17), forms two flow ducts (70, 71) at two opposite sides of the container wall (17) each from the inlet (1) to the second side (53) of the container, wherein in each case a first one of the two first flow portions (75, 75') is guided within the flow ducts (70, 71) from the inlet (1) to the second side (53) of the container along the container wall (17) such that the two first flow portions (75, 75') will meet at the second side (53) of the container with substantially opposite flow directions and will be reunited,
and
perforated elements (9 - 12) which are arranged in the two flow ducts (70, 71) and through which the two first flow portions (75, 75') flow.

2. Separator according to claim 1, wherein
the outlet (14) is arranged at substantially the same height as the inlet (1).

3. Separator (50) according to claim 1 or 2, wherein
in each case at least the first of the perforated elements (9) is arranged in the flow direction of the respective first flow portion (75, 75') in the respective flow duct (70, 71) such that a part of the first perforated element (9) is located above a lower edge (65) of the inlet (1) for forming a rotating flow of the respective first flow portion (75, 75') between the part of the first perforated element (9) located above the lower edge (65) of the inlet (1) and the inlet (1).

4. Separator (50) according to any one of the preceding claims, wherein
at the outlet (14), in particular at the drain pipe (15) of the outlet (14), flow elements (6) are arranged for dividing the reunited first flow portions (75, 75') again into two second flow portions (76, 76') of substantially equal size, and for guiding the two second flow portions (76, 76') in each case through a constricted zone (7) and from the second side (53) along the inner wall side (5) of the flow wall (80) in the direction of the first side (52) of the container, wherein the two second flow portions (76, 76') will meet at the inner wall side (5) of the flow wall (80) at the first side (52) of the container with substantially opposite flow directions and will be reunited.

5. Separator (50) according to any one of the preceding claims, in particular according to any one of claims 1 to 4, wherein
at the opening (83) of the flow wall (80) as an extension of the flow wall (80), flow elements (6) for generating a rotating flow of the two first flow portions (75, 75') and/or the two reunited first flow portions (75, 75') at the second side (53) of the container are arranged, for dividing the reunited first flow portions (75, 75') again into two second flow portions (76, 76') of substantially equal size and for guiding the two second flow portions (76, 76') each through a constricted zone (7) and from the second side (53) along the inner wall side (5) of the flow wall (80) in the direction of the first side (52) of the container, wherein the two second flow portions (76, 76') will meet at the inner wall side (5) of the flow wall (80) at the first side (52) of the container with substantially opposite flow directions and will be reunited.

6. Separator (50) according to any one of the preceding claims, in particular according to any one of claims 1 to 4, wherein
at the opening (83) of the flow wall (80), flow elements (6) are arranged for dividing the reunited first flow portions (75, 75') again into two second flow portion (76, 76') of substantially equal size, for guiding a part of the two second flow portions (76, 76') in each case through a constricted zone (7) and from the second side (53) along the inner wall side (5) of the flow wall (80) in the direction of the first side (52) of the container, and for guiding a part of the respective second flow portions (76, 76') below the flow elements (6), wherein at least parts of the two second flow portions (76, 76') will meet at the inner wall side (5) of the flow wall (80) at the first side (52) of the container with substantially opposite flow directions and will be reunited.

7. Separator (50) according to any one of the preceding claims, wherein the outlet (14) is arranged substantially in the center of the container.

8. Separator (50) according to any one of the preceding claims, wherein the separator (50) is formed to be substantially mirror-symmetrical with respect to a plane through the inlet (1) and the outlet (14).

9. Separator (50) according to any one of the preceding claims, wherein
an optionally circular, rectangular or ellipsoid coarse dirt collector (18) is arranged around the outlet (14).

10. Separator (50) according to any one of the preceding claims, wherein
at least the surface of the perforated elements (9 - 12) and/or of the flow elements (6) and/or of the inner (5) and/or of the outer (4) wall side of the flow wall (80) consists of an oleophilic material, optionally PE-HD.

11. Separator (50) according to any one of the preceding claims, wherein
at least part of the respective flow duct (70, 71) is delimitated in the direction of a bottom of the container by a delimitating element (19).

12. Separator (50) according to any one of the preceding claims, wherein
a slurry collecting chamber (16) is arranged at a bottom of the container for receiving and collecting coarse slurry and/or heavy sediments.

13. Separator (50) according to any one of the preceding claims, wherein
at least one of the perforated elements (9 - 12) and/or the flow elements (6) extends only over a part of the container's height.

14. Method for separating a light liquid/water mixture such as for example oil-contaminated water in a separator (50) having an inner chamber (2) and an outer chamber (45), comprising the following steps of:
feeding the mixture through an inlet (1) at a first side (52) of the separator (50),
guiding the mixture downward and dividing the mixture into two first flow portions (75, 75') of approximately equal size by means of an inlet baffle (60),
causing the two first flow portions (75, 75') to flow through a plurality of perforated elements (9 - 12) in two flow ducts (70, 71) arranged in the outer chamber (45),
reuniting the two first flow portions (75, 75') at a second side (53) of the separator (50) opposite the first side (52) by causing the two first flow portions (75, 75') to meet with substantially opposite flow directions,
dividing the mixture of the two reunited first flow portions (75, 75') by flow elements (6) again into two flow portions (76, 76') of substantially equal size, and guiding the two second flow portions (76,76') into the inner chamber (2) toward the inlet (1),
reuniting of at least parts of the two second flow portions (76, 76') in the inner chamber (2) at the first side (52) of the separator (50) by causing at least parts of the two second flow portions (76, 76') to meet with substantially opposite flow directions,
and
draining the water from the inner chamber (2) through an outlet (14).

## Revendications

1. Séparateur (50), qui est agencé dans un récipient à section de forme circulaire ou ellipsoïdale avec une paroi de récipient (17), pour la séparation d'un mélange liquide léger/eau, par exemple d'eau polluée par du pétrole, incluant :
une entrée (1), agencée sur un premier côté (52) du récipient, avec une chicane d'entrée (60), qui guide vers le bas le mélange amené et le subdivise en deux premières parts d'écoulement (75, 75') sensiblement de même taille,
une sortie (14) avec un tube de sortie (15) pour la sortie de l'eau,
une paroi d'écoulement (80) à section de forme circulaire ou ellipsoïdale avec un côté de paroi intérieure (5) et un côté de paroi extérieure (4), dans lequel la paroi d'écoulement (80) parcourt au moins la moitié d'un cercle complet, de préférence au moins trois quarts d'un cercle complet, et comprend une ouverture (83), qui est tournée vers un second côté (53) du récipient à l'opposé de l'entrée (1),
dans lequel la paroi d'écoulement (80) forme, entre le côté de paroi extérieure (4) de la paroi d'écoulement (80) et la paroi de récipient (17), deux canaux d'écoulement (70, 71) sur deux côtés opposés de la paroi de récipient (17) respectivement depuis l'entrée (1) vers le second côté (53) du récipient, dans lequel dans les canaux d'écoulement (70, 71) une part respective des deux premières parts d'écoulement (75, 75) est guidée depuis l'entrée (1) vers le second côté (53) du récipient le long de la paroi de récipient (17) de telle façon que les deux premières parts d'écoulement (75, 75') se rencontrent sur le second côté (53) du récipient avec des directions d'écoulement essentiellement en sens opposés, et sont à nouveau réunies, et
des éléments à trous (9-12) agencés dans les deux canaux d'écoulement (70, 71), qui sont traversés par les deux premières parts d'écoulement (75, 75').

2. Séparateur selon la revendication 1, dans lequel
la sortie (14) est agencée sensiblement à la même hauteur que l'entrée (1).

3. Séparateur (50) selon la revendication ou 2, dans lequel
au moins le premier des éléments à trous (9) qui se trouve respectivement dans la direction d'écoulement de la première part d'écoulement (75, 75') respective est agencé dans le canal d'écoulement respectif (70, 71) de telle façon qu'une partie du premier élément à trous (9) se trouve au-dessus d'une arête inférieure (65) de l'entrée (1), pour former un écoulement en rotation de la première part d'écoulement respective (75, 75') entre la partie du premier élément à trous (9) qui se trouve au-dessus de l'arête inférieure (65) de l'entrée (1) et l'entrée (1).

4. Séparateur (50) selon l'une des revendications précédentes, dans lequel, au niveau de la sortie (14), en particulier au niveau du tube de sortie (15) de la sortie (14), sont agencés des éléments d'écoulement (6) pour subdiviser à nouveau les premières parts d'écoulement (75, 75') à nouveau réunies en deux secondes parts d'écoulement (76, 76') sensiblement de même taille et pour guider les deux secondes parts d'écoulement (76, 76') à travers une zone de rétrécissement respective (7) et depuis le second côté (53) le long du côté de paroi intérieure (5) de la paroi d'écoulement (80) en direction du premier côté (52) du récipient, et les deux secondes parts d'écoulement (76, 76') se rencontrent avec des directions d'écoulement sensiblement en sens opposés au niveau du côté de paroi intérieure (5) de la paroi d'écoulement (80) sur le premier côté (52) du récipient et sont à nouveau réunies.

5. Séparateur (50) selon l'une des revendications précédentes, en particulier selon l'une des revendications 1 à 4, dans lequel
des éléments d'écoulement (6) sont agencés au niveau de l'ouverture (83) de la paroi d'écoulement (80) à titre de prolongement de la paroi d'écoulement (80) afin d'engendrer un écoulement en rotation des deux premières parts d'écoulement (75, 75') et/ou les deux premières parts d'écoulement (75, 75') à nouveau réunies au niveau du second côté (53) du récipient, pour subdiviser à nouveau les deux premières parts d'écoulement (75, 75') à nouveau réunies en deux secondes parts d'écoulement (76, 76') sensiblement de même taille et pour guider les deux secondes parts d'écoulement (76, 76') à travers une zone de rétrécissement respective (7) et depuis le second côté (53) le long du côté de paroi intérieure (5) de la paroi d'écoulement (80) en direction du premier côté (52) du récipient, et les deux secondes parts d'écoulement (76, 76') se rencontrent avec des directions d'écoulement sensiblement en sens opposés au niveau du côté de paroi intérieure (5) de la paroi d'écoulement (80) sur le premier côté (52) du récipient, et sont à nouveau réunies.

6. Séparateur (50) selon l'une des revendications précédentes, en particulier selon l'une des revendications 1 à 4, dans lequel
des éléments d'écoulement (6) sont agencés au niveau de l'ouverture (83) de la paroi d'écoulement (80), pour subdiviser à nouveau les premières parts d'écoulement (75, 75') à nouveau réunies en deux secondes parts d'écoulement (76, 76') sensiblement de même taille, pour guider une part des deux secondes parts d'écoulement (76, 76') à travers une zone de rétrécissement respective (7) et depuis le second côté (53) le long du côté de paroi intérieure (5) de la paroi d'écoulement (80) en direction du premier côté (52) du récipient et pour guider une partie des secondes parts d'écoulement respectives (76, 76') au-dessous des éléments d'écoulement (6), et au moins des parties des deux secondes parts d'écoulement (76, 76') se rencontrent avec des directions d'écoulement sensiblement en sens opposés au niveau du côté de paroi intérieure (5) de la paroi d'écoulement (80) sur le premier côté (52) du récipient, et sont à nouveau réunies.

7. Séparateur (50) selon l'une des revendications précédentes, dans lequel la sortie (14) est agencée sensiblement au milieu du récipient.

8. Séparateur (50) selon l'une des revendications précédentes, dans lequel le séparateur (50) est réalisé sensiblement à symétrie plane par rapport à un plan traversant l'entrée (1) et la sortie (14).

9. Séparateur (50) selon l'une des revendications précédentes, dans lequel un collecteur de grosses saletés (18), en particulier rond, rectangulaire ou ellipsoïdal, est agencé autour de la sortie (14).

10. Séparateur (50) selon l'une des revendications précédentes, dans lequel au moins la surface des éléments à trous (9-12) et/ou des éléments d'écoulement (6) et/ou du côté de paroi intérieure (5) et/ou du côté de paroi extérieure (4) de la paroi d'écoulement (80) est constitué en un matériau oléophile, en particulier en polyéthylène à haute densité (PE-HD).

11. Séparateur (50) selon l'une des revendications précédentes, dans lequel au moins une partie du canal d'écoulement respectif (70, 71) en direction d'un fond du récipient est limitée par un élément de limitation (19).

12. Séparateur (50) selon l'une des revendications précédentes, dans lequel une chambre de collecte de boues (16) est agencée au fond du récipient, pour recevoir et collecter les boues grossières et/ou les sédiments lourds.

13. Séparateur (50) selon l'une des revendications précédentes, dans lequel l'un au moins des éléments à trous (9-12) et/ou des éléments d'écoulement (6) ne s'étend que sur une partie de la hauteur du récipient.

14. Procédé pour la séparation d'un mélange liquide léger/eau, par exemple d'eau polluée par du pétrole, dans un séparateur (50) présentant une chambre intérieure (2) et une chambre extérieure (45), qui inclut les étapes suivantes :
on admet un mélange par une entrée (1) sur un premier côté (52) du séparateur (50),
on guide le mélange vers le bas et on subdivise le mélange en deux premières parts d'écoulement (75, 75') approximativement de même taille au moyen d'une chicane d'entrée (60),
on laisse les deux premières parts d'écoulement (75, 75') s'écouler à travers plusieurs éléments à trous (9-12) dans deux canaux d'écoulement (70, 71) agencés dans la chambre extérieure (45),
on réunit à nouveau les deux premières parts d'écoulement (75, 75') sur un second côté (53) du séparateur (50) à l'opposé du premier côté (52), par rencontre des deux premières parts d'écoulement (75, 75') avec des directions d'écoulement sensiblement en sens opposés,
on subdivise à nouveau le mélange des deux premières parts d'écoulement (75, 75') à nouveau réunies, par des éléments d'écoulement (6) en deux secondes parts d'écoulement (76, 76') sensiblement de même taille et on guide les deux secondes parts d'écoulement (76, 76') dans la chambre intérieure (2) en direction de l'entrée (1),
on réunit à nouveau au moins des parties des deux secondes parts d'écoulement (76, 76') dans la chambre intérieure (2) sur le premier côté (52) du séparateur (50) par rencontre de parties au moins des deux secondes parts d'écoulement (76, 76') avec des directions d'écoulement sensiblement en sens opposés,
et
on fait sortir l'eau hors de la chambre intérieure (2) via une sortie (14).
